# EUROPEAN PATENT SPECIFICATION

(11) **EP 4 058 373 B1**
(45) Date of publication and mention of the grant of the patent: **02.08.2023**
(21) Application number: 20829966.9
(22) Date of filing: 12.11.2020
(51) Int. Cl.: B65D 41/62, C09J 139/00

(54) **CAPSULE FOR BOTTLES AND COUPLING METHOD OF SAID CAPSULE TO BOTTLES**
KAPSEL FÜR FLASCHEN UND KUPPLUNGSVERFAHREN DER KAPSEL AUF FLASCHEN
CAPSULE POUR BOUTEILLES ET PROCÉDÉ DE COUPLAGE DE LADITE CAPSULE À DES BOUTEILLES

(30) Priority: 14.11.2019 IT 201900021210
(43) Date of publication of application: 21.09.2022
(73) Proprietor: CREALIS S.p.A., 21020 Bodio Lomnago (VA) (IT)
(72) Inventor: ZUGNO, Massimiliano, 21020 Bodio Lomnago (Varese) (IT)
(74) Representative: Tarabbia, Luigi
(86) International application number: PCT/IB2020/060644
(87) International publication number: WO 2021/094964

(56) References cited:
- CH-A- 363 252
- FR-A- 624 942
- US-B2- 8 093 330

## Description

### Technical field

The present invention relates to a so-called "capsule" insertable or couplable to the top portions of containers which are bottles (typically, in the area in which the bottles are capped) as well as a coupling method of said capsule to a bottle.

### Background art

As is known, in the process of bottling wines, sparkling wines and beverages in general, the bottles are first filled with the product and then closed with a cap, which in turn can be of various materials and/or shapes (crown caps fixed peripherally around the pouring mouth of the bottle, caps in expandable natural or synthetic material which insert coaxially to the outlet mouth of the bottle and so on, depending on the needs of the moment): as a result of this operation, it is also possible - consider for example bottles of sparkling wines or drinks with high carbon dioxide content - to couple, in the area of interaction between the cap and the bottle, additional constraint and covering systems which in the technical jargon of the art are known as (already mentioned above) capsules.

A capsule is generally made of a material capable of undergoing a certain deformation, also of a plastic type, so as to locally shape itself and adhere to the portion of the bottle on which it is positioned, and this positioning is completed by the implementation of adequate mechanical interconnection means which act between the capsule and the bottle itself (for example, the so-called "collar" of generally paper material which is glued so as to overlap between the lower edge of the capsule and the side wall of the bottle, thus acting as an anchoring/intermediary element).

Alternatively, the coupling between capsule and bottle can be performed by gluing, and in such cases the glues used today can be of various nature as long as they are compatible with the regulations in force in terms of non-contamination of the contents of the bottle.

However, the coupling methods between capsules and bottles currently in use have some drawbacks related to speed, accuracy and operational flexibility: firstly, the methods of known type do not always manage to guarantee an adequate adhesion of the capsule in reduced times (and this is particularly penalizing when performing "assembly" operations of the bottles in chain productions on an industrial scale) or are not capable of adequately controlling the positioning of the capsule on the neck of the bottle itself, leaving room for uncontrolled rotations and/or twists of the capsule which affect the quality of the overall/finished product both in terms of effective sealing and in terms of sufficient barrier effect of the capsule against atmospheric/environmental agents, and in terms of aesthetic cleanliness and visual regularity of the bottle itself. However, the placement of collars is not always possible either, the particular geometries and volumes of capsules or bottles especially make this additional structural contribution very technically difficult or economically inconvenient (or even, aesthetically unpleasant). CH363252A refers to an example of known capsule for bottles comprising a heat-sealing adhesive made of wax compound that percolates through the paper when heated.

### Object of the Invention

In the aforementioned technical situation, the object of the present invention is therefore to implement and provide an innovative and original capsule for bottles and similar containers which allows overcoming the drawbacks mentioned and which in particular allows to perform coupling assemblies with bottles of disparate shape, in very short times and with a very high positional control (at least in terms of orientation of the capsule with respect to the neck of the bottle, without unwanted rotations or twists) and deformation control (in terms of optimal reconfiguration of the capsule at the time of the coupling thereof to the bottle but also in terms of absence of distortions).

The present invention is also intended to implement a capsule, and a coupling method thereof with a bottle, which is highly economical in terms of structural constitution, reliable in terms of adhesion to any type or shape of bottle and reproducible in a wide range of shapes and proportions (and not least, which is couplable to a bottle without the use of collars or similar devices).

### Brief description of the drawings

These and other objects of the invention are achieved by a capsule as well as by a coupling method between a capsule and a bottle as claimed.

### Detailed description of preferred embodiments of the invention

The capsule according to the invention is indicated by the numerical reference 1 and comprises at least one covering layer 2 and at least one adhesion layer 3.

The covering layer 2 is adapted to define, under coupling conditions with said bottle, a body at least partially counter-shaped to a corresponding "housing portion" of the bottle itself (and in turn, said housing portion can typically consist of the so-called "neck" of the bottle, or more generally of a top portion of a bottle which generally also accommodates a cap).

The adhesion layer 3 is adjacent to the covering layer such that it is interposed between the capsule 1 and the covering layer 2 in coupling conditions with the housing portion of the bottle.

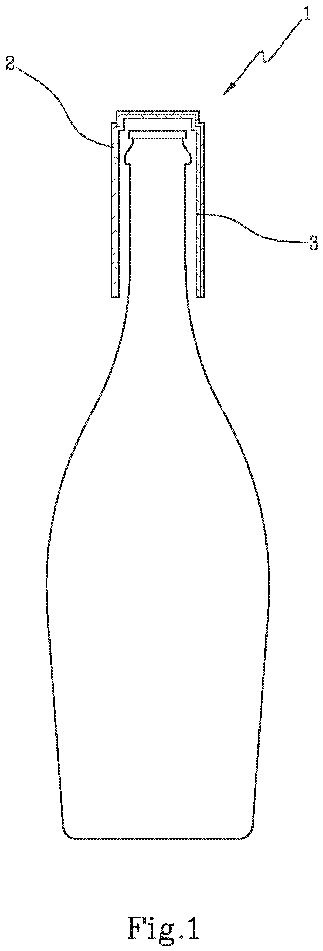

In other words, with reference to figure 1, when the capsule 1 is coupled to the housing portion of the bottle, i.e., is arranged around the housing portion, the adhesion layer 3 faces the housing portion itself.

Advantageously, the adhesion layer 3 comprises at least one activatable adhesive substance between the covering layer 2 and the bottle as a function of the presence of a predetermined amount of ambient moisture: such ambient moisture (which, as has just been seen, is essential for "activating" the adhesion layer 3 and which is to allow the latter to exert a chemical adhesion action on the bottle) must typically be present at least in a temporary space defined between the capsule 1 and the bottle itself in a configuration of mutual proximity between the capsule 1 and the housing portion of the bottle.

In accordance with the present invention, the term "temporary space" introduced above is intended to mean that gap between the capsule 1 and the bottle when these two objects are brought together (capsule 1 arranged around the housing portion of the bottle) and at a time immediately prior to the operation of coupling the capsule to the bottle: the "temporary" nature of this space is in fact given by the fact that once the adhesion layer 3 is activated, it is brought into contact with the surface of the bottle and the aforementioned gap is cancelled/eliminated in geometric/volumetric terms.

Still with regard to the inventive concept underlying this combination of structural factors, it should be noted that unlike the capsules of known type, and the adhesives in accordance with the prior art introduced above, this adhesion layer 3 allows more precise and rapid coupling or assembly operations, avoiding, among other things, the need to "condition" the working environments in which the couplings between capsules and bottles are usually operated (in such environments, the ambient moisture is usually high and this negatively affects the performance of the traditional adhesives and the correct procedure for matching, coupling and "finishing" the bottle).

Going into the detail of the invention, it can be seen that the adhesive substance comprises at least one polyvinylpyrrolidone, and for example a polyvinylpyrrolidone defined by a so-called "CAS number" equal to 9003-39-8: depending on the needs of the moment, this chemical can have, in the current technical jargon to define this type of substance, a so-called "type" defined by the code K30 and/or a molecular weight between 40,000 g/mol and 80,000 g/mol.

Likewise, the adhesive substance nested in the adhesion layer 3 can preferably comprise a solvent, which is typically a 1-methoxy-2-propanol defined by a CAS number equal to 107-98-2 (and for the purposes of the present invention, this 1-methoxy-2-propanol is mixed with polyvinylpyrrolidone).

In quantitative terms, and in order to ensure a correct level of functionality, at least in terms of generating the adhesion force between the covering layer 2 and the surface of the bottle, of the polyvinylpyrrolidone as a function of the presence of moisture, the adhesive substance may consist of a (typically) homogeneous mixture of:
- polyvinylpyrrolidone in a weight percentage between 10% and 30%; and
- 1-methoxy-2-propanol in a weight percentage between 90% and 70%.

As a further example, an embodiment of the invention can provide a homogeneous mixture of polyvinylpyrrolidone in a weight percentage equal to 20% and 1 -methoxy-2-propanol in a weight percentage equal to 80%.

In particular, the aforementioned methoxy propanol defines a vehicle in the formulation of the adhesive substance, whereby during the production process, after applying the adhesion layer 3, the solvent is removed by evaporation.

According to a further advantageous aspect of the present invention, the capsule 1 and more particularly the adhesion layer 3 may further comprise a stabilizing substance, which is mixed with the adhesive substance and is adapted to interact with the latter to limit the ability thereof to activate in the presence of an ambient moisture, which, unlike the moisture present in the "temporary space" defined above, may instead be present in configurations of non-mutual proximity between the capsule 1 and the housing portion of the bottle (or more generally, in spaces in which the bottle and the capsule are included but in which the proximity of the capsule to the bottle does not occur at the housing portion).

In other words, the presence (and functional cooperation) of the stabilizing substance limits the ability of the adhesive substance to activate in the presence of ambient moisture or brought/sprayed superficially on the bottle (or even on the adhesion layer 3) when and/or where such adhesion is not desired: the stabilizing substance therefore prevents the adhesive substance from generating an excessively strong or temporally premature adhesive action, which in turn could generate unwanted adhesions of the capsule at the wrong time or in the wrong position on the bottle.

Depending on the needs of the moment, it should be noted that in some cases (for example where very simple capsules are used in geometric terms or which do not have particular decorations or "visible" surface treatments) it is possible to omit the stabilizing substance from the structure of the adhesion layer 3, the action of the adhesive substance suffices to ensure a correct mounting/assembly/coupling of the capsule 1.

It should be noted at this point in the description of the invention that the adhesion layer 3 can be made by a special painting of the inner part of the capsule (or in other words, painting the surface of the covering layer 2 which faces the bottle under operating conditions) with a product which activates, becoming adhesive, in the presence of moisture or condensation or water intentionally used to wet the bottle, for example in the region of the "neck" thereof: the functional synergy between adhesive substance and stabilizing substance means that in all the steps of the bottle assembling process (and therefore, during a filling + capping + affixing sequence of the capsule) prior to the correct positioning of the capsule on the bottle, the "adhesive paint" which has been put in place there does not activate at the wrong time or in the configuration of incorrect mutual spatial proximity.

To this end, it should be noted that the amount of water/condensation/moisture necessary to activate the adhesive functionality of the capsule 1 can conveniently depend, in addition to the chemical types described herein and/or claimed, also on the surface finish of the capsule (for example, whether the surfaces of the covering layer 2 are smooth or embossed or anything further) as well as on the pressure applied at the time of the coupling between the capsule 1 and the housing portion of the bottle.

Turning now to the stabilizing substance, it can be seen that in one embodiment of the invention the latter comprises at least one nitrocellulose paint and/or acrylic paint.

For example, the nitrocellulose paint can be defined by a CAS number equal to 9004--70-0.

For example, the nitrocellulose paint can be modified with at least one acrylic component.

For example, the nitrocellulose paint can be modified with at least one polyurethane component.

Such possible choices of acrylic or nitrocellulose "paints" can be conveniently further combined, to define the stabilizing substance, with (at least) one respective solvent, which in turn can comprise:
- an ethanol (for example defined by a CAS number equal to 64-17-5); and/or
- an isopropanol (for example defined by a CAS number equal to 67-63-0); and/or
- an ethyl acetate (for example defined by a CAS number equal to 141-78-6).

From the point of view of the state of aggregation and preparation, the aforementioned solvent is then mixed with the nitrocellulose paint and/or the acrylic paint.

Taking into account the different chemical types presented above with regard to the stabilizing substance, it can be seen that in one form of the invention the stabilizing substance itself may comprise a preferably homogeneous mixture of:
- nitrocellulose paint and/or acrylic paint in a weight percentage between 15% and 35%; and
- ethanol and/or isopropanol and/or ethyl acetate in a weight percentage between 85% and 65%.

As a further example, the stabilizing substance can comprise a homogeneous mixture of nitrocellulose paint and/or acrylic paint in a weight percentage equal to 25% and of ethanol and/or isopropanol and/or ethyl acetate a weight percentage equal to 75%.

The overall definition of the adhesion layer 3, in those cases where the functional and synergistic coexistence of the adhesive substance and the stabilizing substance is provided, can be determined according to relative weight percentages (of the two substances) which can in turn be chosen to optimize the adhesion results and/or to keep production costs low and anything further according to the needs of the moment: in this sense, the embodiments of the present invention can include that the adhesive substance and the stabilizing substance are mixed with each other according to a relative weight ratio between 40% and 70% of adhesive substance and between 60% and 30% of stabilizing substance.

From a geometric/morphological point of view, the mixture of adhesive substance and stabilizing substance, which as seen can be considered as a painting state affixed to the "inner" surface of the covering layer 2, can be deposited and distributed on the adhesion layer 3 itself according to appropriate thicknesses and/or spatial distributions: in one embodiment of the invention, the adhesion layer 3 can for example comprise the adhesive substance and the stabilizing substance mixed with each other and distributed on the covering layer 2 according to a density between 1.5 g/m² and 2.5 g/m².

An object of the present invention is also an innovative and original method for coupling a capsule to containers which are bottles, and this method starts from a first step of preparing a capsule 1 (which is in accordance with what has been claimed below) and from a coordinated step of preparing a bottle (this bottle in turn defines a housing portion for the capsule 1 and this housing portion will typically be a neck of said bottle or a top portion of the bottle or a portion adapted to accommodate a cap for said bottle).

The method includes a step of mutually bringing the capsule 1 closer to the housing portion (i.e., arranging the capsule 1 around the housing portion so that the adhesion layer 3 is interposed between the covering layer 2 and the bottle) and a step of making the capsule 1 adhere to the housing portion.

Advantageously, the step just introduced of making the capsule 1 adhere to the housing portion comprises a sub-step of "activating" (in the technical sense already illustrated and clarified above) the adhesion layer 3 with a predetermined amount of moisture present in a temporary space defined between the capsule 1 and the housing portion.

Conveniently, the step of activating the adhesion layer 3 comprises a sub-step of distributing in the temporary space an amount of moisture between 100 and 200 mg, and as already seen above this moisture can be distributed in the form of water in liquid or gaseous or micronized form suspended within the temporary space and/or deposited on the adhesion layer 3 and/or deposited on the housing portion.

From an instrumental and implementation perspective, the sub-step of distributing the moisture can be carried out by means of sprays and/or nebulizers and/or by regulation and conditioning of the thermal and/or hygrometric parameters of a working atmosphere in which the capsule 1 and the bottle are placed.

Further, the present method can provide for a step of preforming the capsule 1 (typically, in order to determine a shape of the capsule 1 itself at least partially counter-shaped to the housing portion of the bottle) and a step of pressing the capsule 1 on the housing portion of the bottle: this last step of pressing the capsule 1 can conveniently be concurrent with the sub-step of activating the adhesion layer 3 and in turn comprises a sub-step of eliminating the aforementioned "temporary space" present between the capsule 1 and the housing portion of the bottle.

Notably, an object of the present invention is a bottle, which typically comprises a containment body (which in turn defines a closed volume and has a top closure portion which can be capped connected to the containment body) and a capsule 1 connected to the closure portion which can be capped at a housing portion: this capsule 1 is in accordance with what has been claimed below, or the capsule 1 itself is coupled to the bottle according to a method in accordance with what has been claimed below.

The invention allows to obtain several advantages over the known art.

First of all, it should be noted that the peculiar stratification of the capsule, or better still the peculiar composition of the layers of the semi-finished product from which the capsule can be obtained, allows to choose with maximum operational flexibility any final geometry of the capsule itself, ensuring to any of these geometries an almost perfect adhesion and obtained in appropriately calibrated times between capsule and bottle. From the point of view of the adhesion function, it should also be noted that the peculiar composition of substances (which as seen in the description above can also be a separate object of an invention for the structural features of a capsule) which determine the adhesion between capsule and bottle is capable of exploiting, advantageously, an environmental element intrinsically present in the working environment - that is, the moisture suspended in the atmosphere or in any case the moisture easily regulatable and immersible into the atmosphere of the work area - to activate, so as to make this same environmental feature functionally useful which in the known art is substantially useless or even harmful as it favours the uncontrolled sliding of the capsule on the bottle or slows the adhesion times thereof (where traditional adhesive substances such as "pressure-sensitive" glues or glues which are driven by heat are used).

As a result of the advantages deriving from the adhesive composition and the capsule provided with this adhesive composition, it is also noted that the process of coupling between the capsule itself and the bottle is much faster and more accurate and this process can even be implemented in "retrofitting" also on bottling and coupling systems of a known type without particular distortions to existing machinery (this can occur because the only modification of the system which may be necessary, if the moisture of the working environment is not sufficient, is at most given by the implementation of a humidifier).

Finally, it should be noted that the individual components of the adhesive composition employed in the present invention can be easily found and mixed with adequate operational flexibility to adapt to non-standard production (or implementation of the capsule-bottle coupling method) needs and can be fully compatible with the current hygiene-sanitary regulations which must usually be respected in the field of bottling products such as wines, beers, sparkling wines and so on.

## Claims

1. Capsule couplable to a container which is a bottle, said capsule being couplable to housing portions, preferably at the top and/or at a cap of said bottle, said capsule (1) comprising:
- at least one covering layer (2) adapted to define, in coupling conditions with said bottle, a body, at least partially counter-shaped to said housing portion of the bottle itself; and
- at least one adhesion layer (3) adjacent to said covering layer (2) and such that it can be interposed between the housing portion and said covering layer (2) in coupling conditions with the housing portion of the bottle;
wherein said adhesion layer (3) comprises at least one activatable adhesive substance between the covering layer (2) and the bottle as a function of the presence of a predetermined amount of ambient moisture, said ambient moisture being present at least in a temporary space defined between the capsule (1) and the bottle itself in a configuration of mutual proximity between the capsule (1) and the housing portion of the bottle;
**characterized in that** the adhesive substance comprises at least one polyvinylpyrrolidone, preferably a polyvinylpyrrolidone defined by a CAS number equal to 9003-39-8 and being even more preferably of a K30 type and/or having a molecular weight between 40,000 g/mol and 80,000 g/mol.

2. Capsule according to claim 1, wherein the adhesive substance further comprises a 1-methoxy-2-propanol defined by a CAS number equal to 107-98-2, said 1-methoxy-2-propanol being mixed with said polyvinylpyrrolidone.

3. Capsule according to claim 2, wherein the adhesive substance comprises a preferably homogeneous mixture of:
- said polyvinylpyrrolidone in a weight percentage between 10% and 30%; and
- said 1-methoxy-2-propanol in a weight percentage between 90% and 70%.

4. Capsule according to claim 3, wherein the adhesive substance comprises a homogeneous mixture of polyvinylpyrrolidone in a weight percentage equal to 20% and 1-methoxy-2-propanol in a weight percentage equal to 80%.

5. Capsule according to claim 1, wherein said adhesion layer (3) further comprises a stabilizing substance mixed with said adhesive substance and adapted to interact with said adhesive substance to limit the ability thereof to activate in the presence of an ambient moisture present in configurations of non-mutual proximity between the capsule (1) and the housing portion of the bottle.

6. Capsule according to claim 5, wherein said stabilizing substance comprises at least one nitrocellulose paint and/or one acrylic paint;
said nitrocellulose paint preferably being defined by a CAS number equal to 9004-70-0, or preferably being modified with at least one acrylic component, or preferably being modified with at least one polyurethane component.

7. Capsule according to claim 6, wherein the stabilizing substance further comprises at least one solvent comprising:
- an ethanol, preferably defined by a CAS number equal to 64-17-5; and/or
- an isopropanol, preferably defined by a CAS number equal to 67-63-0; and/or
- an ethyl acetate, preferably defined by a CAS number equal to 141-78-6, said solvent being mixed with said nitrocellulose paint and/or said acrylic paint.

8. Capsule according to claim 7, wherein the stabilizing substance comprises a preferably homogeneous mixture of:
- said nitrocellulose paint and/or said acrylic paint in a weight percentage between 15% and 35%; and
- said solvent in a weight percentage between 85% and 65%.

9. Capsule according to claim 8, wherein the stabilizing substance comprises a homogeneous mixture of nitrocellulose paint and/or acrylic paint in a weight percentage equal to 25% and of said solvent in a weight percentage equal to 75%.

10. Capsule according to any one of claims 5-9, wherein the adhesive substance and the stabilizing substance are mixed with each other according to a relative weight ratio between 40% and 70% of adhesive substance and between 60% and 30% of stabilizing substance.

11. Capsule according to any one of claims 5-10, wherein the adhesion layer (3) comprises the adhesive substance and the stabilizing substance mixed with each other and distributed on the covering layer (2) according to a density between 1.5 g/m² and 2.5 g/m².

12. Method for coupling a capsule to a container which is a bottle, comprising the following steps:
- providing a capsule (1) according to any one of the preceding claims;
- providing a bottle, said bottle defining a housing portion for the capsule (1), said housing portion preferably being a neck of said bottle or a top portion of said bottle or a portion adapted to accommodate a cap for said bottle;
- arranging the capsule (1) around the housing portion so that the adhesion layer (3) is interposed between the housing portion of the bottle and the covering layer (2); and
- making the capsule (1) adhere to the housing portion;
wherein said step of making the capsule (1) adhere to the housing portion comprises a sub-step of activating said adhesion layer (3) with a predetermined amount of moisture present in a temporary space defined between the capsule (1) and the housing portion.

13. Method according to claim 12, wherein said step of activating the adhesion layer (3) comprises a sub-step of distributing in said temporary space an amount of moisture between 100 and 200 mg, said moisture preferably being formed by water in liquid or gaseous or micronized form suspended within the temporary space and/or deposited on the adhesion layer (3) and/or deposited on the housing portion.

14. Method according to any one of the preceding claims 12 to 13, wherein there is also a step of preforming the capsule (1), said step of preforming the capsule (1) preferably being adapted to determine a shape of the capsule (1) itself at least partially counter-shaped to the housing portion of the bottle.

15. Method according to any one of the preceding claims 12 to 14, wherein there is also a step of pressing the capsule (1) on the housing portion of the bottle, said step of pressing the capsule (1) preferably being concurrent with said sub-step of activating the adhesion layer (3) and comprising a sub-step of eliminating said temporary space present between the capsule (1) and the housing portion of the bottle.

16. Container which is a bottle, comprising:
- a containment body having a closure portion which can be capped so as to define a closed volume, said closure portion preferably being at the top of said containment body; and
- a capsule (1) connected to said closure portion which can be capped at a housing portion,
**characterized in that** the capsule (1) is according to any one of the preceding claims 1 to 11.

17. Container which is a bottle,
- a containment body having a closure portion which can be capped so as to define a closed volume, said closure portion preferably being at the top of said containment body; and
- a capsule (1) connected to said closure portion which can be capped at a housing portion,
**characterized in that** the capsule (1) is coupled to the bottle with a method according to any one of the preceding claims 12 to 15.

## Patentansprüche

1. Kapsel, die mit einem Behälter, bei dem es sich um eine Flasche handelt, kuppelbar ist, wobei die Kapsel mit Kapselungsabschnitten, vorzugsweise an der Oberseite und/oder an einer Kappe der genannten Flasche kuppelbar ist, wobei die genannte Kapsel (1) Folgendes umfasst:
- mindestens eine Deckschicht (2), die geeignet ist, in mit der genannten Flasche gekuppeltem Zustand einen Körper zu definieren, der mindestens teilweise ein Gegenprofil zu dem genannten Kapselungsabschnitt der Flasche bildet; und
- mindestens eine Haftschicht (3), angrenzend an die genannte Deckschicht (2), die so ausgelegt ist, dass sie in mit dem Kapselungsabschnitt der Flasche gekuppeltem Zustand zwischen den Kapselungsabschnitt und die genannte Deckschicht (2) eingefügt werden kann;
wobei die genannte Haftschicht (3) mindestens eine abhängig von dem Vorhandensein einer bestimmten Menge Umgebungsfeuchtigkeit aktivierbare Haftsubstanz zwischen der Deckschicht (2) und der Flasche umfasst und die genannte Umgebungsfeuchtigkeit mindestens in einem zwischen der Kapsel (1) und der Flasche in einer Konfiguration der gegenseitigen Nähe zwischen der Kapsel (1) und dem Kapselungsabschnitt der Flasche definierten vorübergehenden Raum vorhanden ist;
**dadurch gekennzeichnet, dass** die Haftsubstanz mindestens ein Polyvinylpyrrolidon, vorzugsweise ein von einer 9003-39-8 entsprechenden CAS-Nummer definiertes Polyvinylpyrrolidon, das noch bevorzugterweise einem K-Wert von 30 entspricht und/oder ein Molekulargewicht zwischen 40.000 g/mol und 80.000 g/mol aufweist, umfasst.

2. Kapsel nach Anspruch 1, bei der die Haftsubstanz außerdem ein von einer 107-98-2 entsprechenden CAS-Nummer definiertes 1-Methoxy-2-propanol umfasst, wobei das genannte 1-Methoxy-2-propanol mit dem genannten Polyvinylpyrrolidon gemischt ist.

3. Kapsel nach Anspruch 2, wobei die Haftsubstanz eine vorzugsweise homogene Mischung aus Folgendem umfasst:
- dem genannten Polyvinylpyrrolidon in einem Gewichtsanteil zwischen 10 % und 30 %; und
- dem genannten 1-Methoxy-2-propanol in einem Gewichtsanteil zwischen 90 % und 70 %.

4. Kapsel nach Anspruch 3, wobei die Haftsubstanz eine homogene Mischung von Polyvinylpyrrolidon in einem Gewichtsanteil von 20 % und 1-Methoxy-2-propanol in einem Gewichtsanteil von 80 % umfasst.

5. Kapsel nach Anspruch 1, bei der die genannte Haftschicht (3) außerdem eine mit der genannten Haftsubstanz gemischte stabilisierende Substanz umfasst, die geeignet ist, mit der genannten Haftsubstanz zu interagieren, um deren Fähigkeit zur Aktivierung beim Vorhandensein einer Umgebungsfeuchtigkeit bei Konfigurationen ohne gegenseitige Nähe zwischen der Kapsel (1) und dem Kapselungsabschnitt der Flasche zu begrenzen.

6. Kapsel nach Anspruch 5, bei der die genannte stabilisierende Substanz mindestens eine Nitrozellulosefarbe und/oder eine Acrylfarbe umfasst;
wobei die genannten Nitrozellulosefarbe vorzugsweise von einer 9004-70-0 entsprechenden CAS-Nummer definiert wird oder vorzugsweise mit mindestens einer Acrylkomponente modifiziert ist oder vorzugsweise mit mindestens einer Polyurethankomponente modifiziert ist.

7. Kapsel nach Anspruch 6, wobei die stabilisierende Substanz außerdem mindestens ein Lösungsmittel umfasst, das Folgendes umfasst:
- ein Ethanol, das vorzugsweise von einer 64-17-5 entsprechenden CAS-Nummer definiert wird; und/oder
- ein Isopropanol, das vorzugsweise von einer 67-63-0 entsprechenden CAS-Nummer definiert wird; und/oder
- ein Ethylacetat, das vorzugsweise von einer 141-78-6 entsprechenden CAS-Nummer definiert wird, wobei das genannte Lösungsmittel mit der genannten Nitrozellulosefarbe und/oder der genannten Acrylfarbe gemischt ist.

8. Kapsel nach Anspruch 7, wobei die stabilisierende Substanz eine vorzugsweise homogene Mischung aus Folgendem umfasst:
- der genannten Nitrozellulosefarbe und/oder der genannten Acrylfarbe in einem Gewichtsanteil zwischen 15 % und 35 %; und
- des genannten Lösungsmittels in einem Gewichtsanteil zwischen 85% und 65%.

9. Kapsel nach Anspruch 8, wobei die stabilisierende Substanz eine homogene Mischung von Nitrozellulosefarbe und/oder Acrylfarbe in einem Gewichtsanteil von 25 % und des genannten Lösungsmittels in einem Gewichtsanteil von 75 % umfasst.

10. Kapsel nach einem beliebigen der Ansprüche 5 bis 9, wobei die Haftsubstanz und die stabilisierende Substanz miteinander entsprechend eines Verhältnisses des relativen Gewichts zwischen 40 % und 70 % der Haftsubstanz und zwischen 60 % und 30 % der stabilisierenden Substanz gemischt sind.

11. Kapsel nach einem beliebigen der Ansprüche 5 bis 10, wobei die Haftschicht (3) die Haftsubstanz und die stabilisierende Substanz miteinander gemischt und auf der Deckschicht (2) mit einer Dichte zwischen 1,5 g/m² und 2,5 g/m² verteilt umfasst.

12. Kupplungsverfahren der Kapsel auf einem Behälter, bei dem es sich um eine Flasche handelt, umfassend die folgenden Schritte:
- Bereitstellung einer Kapsel (1) nach einem beliebigen der vorangegangenen Ansprüche;
- Bereitstellung einer Flasche, wobei die genannte Flasche einen Kapselungsabschnitt für die Kapsel (1) definiert und der genannte Kapselungsabschnitt vorzugsweise ein Hals der genannten Flasche oder der obere Teil der genannten Flasche oder ein Teil ist, der geeignet ist, eine Kappe für die genannte Flasche unterzubringen;
- Anordnen der Kapsel (1) um den Kapselungsabschnitt, so dass die Haftschicht (3) zwischen den Kapselungsabschnitt der Flasche und die Deckschicht (2) eingefügt wird; und
- Anhaften der Kapsel (1) an dem Kapselungsabschnitt;
wobei der Schritt des Anhaftens der Kapsel (1) an dem Kapselungsabschnitt einen Unterschritt der Aktivierung der genannten Haftschicht (3) bei einer bestimmten Menge Feuchtigkeit in einem zwischen der Kapsel (1) und dem Kapselungsabschnitt definierten vorübergehenden Raum umfasst.

13. Verfahren nach Anspruch 12, bei dem der genannte Schritt der Aktivierung der Haftschicht (3) einen Unterschritt der Verteilung einer Feuchtigkeitsmenge zischen 100 and 200 mg in dem genannten vorübergehenden Raum umfasst, wobei die genannte Feuchtigkeit vorzugsweise aus in dem vorübergehenden Raum suspendiertem und/oder auf der Haftschicht (3) befindlichem und/oder auf dem Kapselungsabschnitt befindlichem Wasser in flüssiger oder gasförmiger oder mikronisierter Form gebildet wird.

14. Verfahren nach einem beliebigen der vorangegangenen Ansprüche 12 bis 13, das auch einen Schritt des Vorformens der Kapsel (1) vorsieht, wobei der Schritt des Vorformens der Kapsel (1) vorzugsweise geeignet ist, eine Form der Kapsel (1) zumindest teilweise als Gegenprofil zu dem Kapselungsabschnitt der Flasche festzulegen.

15. Verfahren nach einem beliebigen der vorangegangenen Ansprüche 12 bis 14, das auch einen Schritt des Pressens der Kapsel (1) auf den Kapselungsabschnitt vorsieht, wobei der genannte Schritt des Pressens der Kapsel (1) vorzugsweise gleichzeitig mit dem genannten Unterschritt der Aktivierung der Haftschicht (3) erfolgt und einen Unterschritt des Beseitigens des vorübergehenden Raums zwischen der Kapsel (1) und dem Kapselungsabschnitt der Flasche umfasst.

16. Behälter, bei dem es sich um eine Flasche handelt, umfassend:
- einen Umschließungskörper mit einem Verschlussabschnitt, der mit einer Kappe versehen werden kann, um ein geschlossenes Volumen zu definieren, wobei der genannte Verschlussabschnitt sich vorzugsweise oben an dem genannten Umschließungskörper befindet; und
- eine Kapsel (1), die mit dem genannten Verschlussabschnitt verbunden ist, der an einem Kapselungsabschnitt mit einer Kappe versehen werden kann,
**dadurch gekennzeichnet, dass** die Kapsel (1) einem beliebigen der vorangegangenen Ansprüche 1 bis 11 entspricht.

17. Behälter, bei dem es sich um eine Flasche handelt, umfassend:
- einen Umschließungskörper mit einem Verschlussabschnitt, der mit einer Kappe versehen werden kann, um ein geschlossenes Volumen zu definieren, wobei der genannte Verschlussabschnitt sich vorzugsweise oben an dem genannten Umschließungskörper befindet; und
- eine Kapsel (1), die mit dem genannten Verschlussabschnitt verbunden ist, der an einem Kapselungsabschnitt mit einer Kappe versehen werden kann,
**dadurch gekennzeichnet, dass** die Kapsel (1) mit der Flasche mit einem Verfahren nach einem beliebigen der vorangegangenen Ansprüche 12 bis 15 gekuppelt wird.

## Revendications

1. Capsule couplable à un récipient qui est une bouteille, ladite capsule pouvant être couplée à des parties de logement, de préférence au niveau du sommet et/ou d'un bouchon de ladite bouteille, ladite capsule (1) comprenant :
- au moins une couche de couverture (2) apte à définir, dans des conditions de couplage à ladite bouteille, un corps, au moins partiellement en forme complémentaire par rapport à ladite partie de logement de la bouteille même ; et
- au moins une couche adhésive (3) adjacente à ladite couche de couverture (2) et de façon qu'elle puisse être interposée entre la partie de logement et ladite couche de couverture (2) dans des conditions de couplage à la partie de logement de la bouteille ;
dans laquelle ladite couche adhésive (3) comprend au moins une substance adhésive pouvant être activée entre la couche de couverture (2) et la bouteille en fonction de la présence d'une quantité prédéterminée d'humidité ambiante, ladite humidité ambiante étant présente au moins dans un espace temporaire défini entre la capsule (1) et la bouteille dans une configuration de proximité mutuelle entre la capsule (1) et la partie de logement de la bouteille ;
**caractérisée en ce que** la substance adhésive comprend au moins de la polyvinylpyrrolidone, de préférence de la polyvinylpyrrolidone définie par un numéro CAS égal à 9003-39-8 et étant encore plus préférentiellement de type K30 et/ou ayant un poids moléculaire compris entre 40.000 g/mol et 80.000 g/mol.

2. Capsule selon la revendication 1, dans laquelle la substance adhésive comprend en outre du 1-méthoxy-2-propanol défini par un numéro CAS égal à 107-98-2, ledit 1-méthoxy-2-propanol étant mélangé avec ladite polyvinylpyrrolidone.

3. Capsule selon la revendication 2, dans laquelle la substance adhésive comprend un mélange préférablement homogène de :
- ladite polyvinylpyrrolidone dans un pourcentage pondéral compris entre 10% et 30% ; et
- ledit 1-méthoxy-2-propanol dans un pourcentage pondéral compris entre 90% et 70%.

4. Capsule selon la revendication 3, dans laquelle la substance adhésive comprend un mélange homogène de polyvinylpyrrolidone dans un pourcentage pondéral égal à 20% et 1-méthoxy-2-propanol dans un pourcentage pondéral égal à 80%.

5. Capsule selon la revendication 1, dans laquelle ladite couche adhésive (3) comprend en outre une substance de stabilisation mélangée avec ladite substance adhésive et apte à interagir avec ladite substance adhésive pour limiter sa capacité de s'activer en présence d'une humidité ambiante présente dans des configurations de proximité non mutuelle entre la capsule (1) et la partie de logement de la bouteille.

6. Capsule selon la revendication 5, dans laquelle ladite substance de stabilisation comprend au moins une peinture nitrocellulosique et/ou une peinture acrylique ;
ladite peinture nitrocellulosique étant de préférence définie par un numéro CAS égal à 9004-70-0, ou étant de préférence modifiée avec au moins un composant acrylique, ou étant de préférence modifié avec au moins un composant de polyuréthane.

7. Capsule selon la revendication 6, dans laquelle la substance de stabilisation comprend en outre au moins un solvant comprenant :
- de l'éthanol, de préférence défini par un numéro CAS égal à 64-17-5 ; et/ou
- de l'isopropanol, de préférence défini par un numéro CAS égal à 67-63-0 ; et/ou
- de l'acétate d'éthyle, de préférence défini par un numéro CAS égal à 141-78-6, ledit solvant étant mélangé avec ladite peinture nitrocellulosique et/ou ladite peinture acrylique.

8. Capsule selon la revendication 7, dans laquelle la substance de stabilisation comprend un mélange de préférence homogène de :
- ladite peinture nitrocellulosique et/ou ladite peinture acrylique dans un pourcentage pondéral compris entre 15% et 35% ; et
- ledit solvant dans un pourcentage pondéral compris entre 85% et 65%.

9. Capsule selon la revendication 8, dans laquelle la substance de stabilisation comprend un mélange homogène de peinture nitrocellulosique et/ou peinture acrylique dans un pourcentage pondéral égal à 25% et dudit solvant dans un pourcentage pondéral égal à 75%.

10. Capsule selon l'une quelconque des revendications 5-9, dans laquelle la substance adhésive et la substance de stabilisation sont mélangées l'une avec l'autre selon un rapport pondéral relatif compris entre 40% et 70% de substance adhésive et compris entre 60% et 30% de substance de stabilisation.

11. Capsule selon l'une quelconque des revendications 5-10, dans laquelle la couche adhésive (3) comprend la substance adhésive et la substance de stabilisation mélangées l'une avec l'autre et distribuées sur la couche de couverture (2) selon une densité comprise entre 1,5 g/m² et 2,5 g/m².

12. Procédé de couplage d'une capsule à un récipient qui est une bouteille, comprenant les étapes suivantes :
- fournir une capsule (1) selon l'une quelconque des revendications précédentes ;
- fournir une bouteille, ladite bouteille définissant une partie de logement pour la capsule (1), ladite partie de logement étant de préférence un col de ladite bouteille ou une partie supérieure de ladite bouteille ou une partie apte à recevoir un bouchon pour ladite bouteille ;
- disposer la capsule (1) autour de la partie de logement de façon à ce que la couche adhésive (3) soit interposée entre la partie de logement de la bouteille et la couche de couverture (2) ; et
- faire adhérer la capsule (1) à la partie de logement ;
dans lequel ladite étape consistant à faire adhérer la capsule (1) à la partie de logement comprend une sous-étape consistant à activer ladite couche adhésive (3) avec une quantité prédéterminée d'humidité présente dans un espace temporaire défini entre la capsule (1) et la partie de logement.

13. Procédé selon la revendication 12, dans laquelle ladite étape consistant à activer la couche adhésive (3) comprend une sous-étape consistant à distribuer dans ledit espace temporaire une quantité d'humidité comprise entre 100 et 200 mg, ladite humidité étant de préférence formée par de l'eau sous forme liquide ou gazeuse ou micronisée suspendue à l'intérieur de l'espace temporaire et/ou déposée sur la couche adhésive (3) et/ou déposée sur la partie de logement.

14. Procédé selon l'une quelconque des revendications précédentes 12 à 13, dans lequel il y a également une étape consistant à préformer la capsule (1), ladite étape consistant à préformer la capsule (1) étant de préférence apte à déterminer une forme de capsule (1) au moins partiellement complémentaire par rapport à la partie de logement de la bouteille.

15. Procédé selon l'une quelconque des revendications précédentes 12 à 14, dans lequel il y a également une étape consistant à presser la capsule (1) sur la partie de logement de la bouteille, ladite étape consistant à presser la capsule (1) ayant de préférence lieu simultanément avec ladite sous-étape consistant à activer la couche adhésive (3) et comprenant une sous-étape consistant à éliminer ledit espace temporaire présent entre la capsule (1) et la partie de logement de la bouteille.

16. Récipient qui est une bouteille, comprenant
- un corps de confinement ayant une partie de fermeture qui peut être fermée par un bouchon de manière à définir un volume fermé, ladite partie de fermeture étant de préférence au niveau du sommet dudit corps de confinement ; et
- une capsule (1) reliée à ladite partie de fermeture qui peut être fermée par un bouchon au niveau d'une partie de logement,
**caractérisé en ce que** la capsule (1) est selon l'une quelconque des revendications précédentes 1 à 11.

17. Récipient qui est une bouteille, comprenant
- un corps de confinement ayant une partie de fermeture qui peut être fermée par un bouchon de manière à définir un volume fermé, ladite partie de fermeture étant de préférence au niveau du sommet dudit corps de confinement ; et
- une capsule (1) reliée à ladite partie de fermeture qui peut être fermée par un bouchon au niveau d'une partie de logement,
**caractérisé en ce que** la capsule (1) est couplée à la bouteille par un procédé selon l'une quelconque des revendications précédentes 12 à 15.
